# EUROPEAN PATENT APPLICATION

(11) **EP 4 697 782 A1**
(43) Date of publication of application: **18.02.2026**
(21) Application number: 25194557.2
(22) Date of filing: 07.08.2025
(51) Int. Cl.: H04W 24/02, H04W 24/10, H04W 24/08, H04W 72/12

(54) **INTERRUPTION AVOIDANCE**

(30) Priority: 08.08.2024 GB 202411694
(71) Applicant: Nokia Technologies Oy, 02610 Espoo (FI)
(72) Inventor: CAUDURO DIAS DE PAIVA, Rafael, 9200 Aalborg (DK); HOFMANN, Jürgen, 86504 Merching (DE); DALSGAARD, Lars, 90230 Oulu (FI); PEDERSEN, Klaus Ingemann, 9000 Aalborg (DK); SONG, Jian, 91120 Palaiseau (FR); PARIS, Stefano, 92170 Vanves (FR)
(74) Representative: Page White Farrer

(57) **Abstract**

Example embodiments of the present disclosure are directed to methods, devices, apparatuses and computer readable storage medium for interruption avoidance. In the method, a first apparatus receives, from a second apparatus, information for disallowing a communication interruption associated with a measurement. Moreover, the first apparatus handles respective measurements on one or more measurement objects based on the received information and object information. The object information at least indicates whether the one or more measurement objects cause a communication interruption. Thereby, the proposed solution can advantageously avoid additional delay that may be caused by interruptions.

## Description

### FIELD

Various example embodiments of the present disclosure generally relate to the field of telecommunication and in particular, to methods, devices, apparatuses and computer readable storage medium for interruption avoidance.

### BACKGROUND

A Mobile device has to measure the neighboring cell signal and other carrier components. The mobile device may be equipped with a single radio frequency (RF) module to control the manufacturing cost and form factor, and thus the mobile device has to perform all these measurements, and transmission (Tx) and reception (Rx) of data, using the single RF module. As such, the mobile device may measure the neighboring cell signal transmitting on the same frequency easily while simultaneously transmitting and receiving data from the serving cell.

However, in the case of measuring a cell operating at a different frequency (such as an inter-frequency neighboring cell) or other radio access technology (RAT), the mobile device has to suspend communication (such as Tx/Rx) with the serving cell and needs to tune the RF module to configured frequencies (such as configured measurement objects). The mobile device may resume communication with the serving cell after the suspended duration. Such measurements may cause interruptions during which the mobile device is unable to communicate with the network.

### SUMMARY

In a first aspect of the present disclosure, there is provided a first apparatus. The first apparatus comprises at least one processor; and at least one memory storing instructions that, when executed by the at least one processor, cause the first apparatus at least to: receive, from a second apparatus, information for disallowing a communication interruption associated with a measurement; and perform communication with the second apparatus based on the received information.

In a second aspect of the present disclosure, there is provided a second apparatus. The second apparatus comprises at least one processor; and at least one memory storing instructions that, when executed by the at least one processor, cause the second apparatus at least to: transmit, to a first apparatus, information for disallowing a communication interruption associated with a measurement; and perform communication with the first apparatus based on the transmitted information.

In a third aspect of the present disclosure, there is provided a method. The method comprises: receiving, from a second apparatus, information for disallowing a communication interruption associated with a measurement; and performing communication with the second apparatus based on the received information.

In a fourth aspect of the present disclosure, there is provided a method. The method comprises: transmitting, to a first apparatus, information for disallowing a communication interruption associated with a measurement; and performing communication with the first apparatus based on the transmitted information.

In a fifth aspect of the present disclosure, there is provided a first apparatus. The first apparatus comprises means for receiving, from a second apparatus, information for disallowing a communication interruption associated with a measurement; and means for performing communication with the second apparatus based on the received information.

In a sixth aspect of the present disclosure, there is provided a second apparatus. The second apparatus comprises means for transmitting, to a first apparatus, information for disallowing a communication interruption associated with a measurement; and means for performing communication with the first apparatus based on the transmitted information.

In a seventh aspect of the present disclosure, there is provided a first apparatus. The first apparatus comprises at least one processor; and at least one memory storing instructions that, when executed by the at least one processor, cause the first apparatus at least to: receive, from a second apparatus, information indicating a time window during which a communication interruption associated with a measurement is not allowed; determine a temporal relation between the time window and a measurement window for the measurement; and perform communication with the second apparatus based on the temporal relation.

In an eighth aspect of the present disclosure, there is provided a method. The method comprises: receiving, from a second apparatus, information indicating a time window during which a communication interruption associated with a measurement is not allowed; determining a temporal relation between the time window and a measurement window for the measurement; and performing communication with the second apparatus based on the temporal relation.

In a ninth aspect of the present disclosure, there is provided a first apparatus. The first apparatus comprises means for receiving, from a second apparatus, information indicating a time window during which a communication interruption associated with a measurement is not allowed; means for determining a temporal relation between the time window and a measurement window for the measurement; and means for performing communication with the second apparatus based on the temporal relation.

In a tenth aspect of the present disclosure, there is provided a first apparatus. The first apparatus comprises at least one processor; and at least one memory storing instructions that, when executed by the at least one processor, cause the first apparatus at least to: receive, from a second apparatus, information for disallowing a communication interruption associated with a measurement; and handle respective measurements on one or more measurement objects based on the received information and object information, wherein the object information at least indicates whether the one or more measurement objects cause a communication interruption.

In an eleventh aspect of the present disclosure, there is provided a method. The method comprises: receiving, from a second apparatus, information for disallowing a communication interruption associated with a measurement; and handling respective measurements on one or more measurement objects based on the received information and object information, wherein the object information at least indicates whether the one or more measurement objects cause a communication interruption.

In a twelfth aspect of the present disclosure, there is provided a first apparatus. The first apparatus comprises means for receiving, from a second apparatus, information for disallowing a communication interruption associated with a measurement; and means for handling respective measurements on one or more measurement objects based on the received information and object information, wherein the object information at least indicates whether the one or more measurement objects cause a communication interruption.

In a thirteenth aspect of the present disclosure, there is provided a computer readable medium. The computer readable medium comprises instructions stored thereon for causing an apparatus to perform at least the method according to any of the third, fourth, eighth, or eleventh aspect.

It is to be understood that the Summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, where:
FIG. 1 illustrates an example communication environment in which example embodiments of the present disclosure can be implemented;
FIG. 2 illustrates an example of measurements without gaps;
FIG. 3 illustrates a signaling diagram where a UE indicates that it is capable of performing measurements without gaps with interruptions;
FIG. 4 illustrates a signaling chart for communication according to some example embodiments of the present disclosure;
FIG. 5 illustrates a schematic diagram of measurement skipping according to the first solution;
FIG. 6 illustrates a signaling chart for communication according to some example embodiments of the present disclosure;
FIG. 7 illustrates an interruption avoidance window indication in a first scenario according to the second solution;
Fig. 8 illustrates an interruption avoidance window indication in a second scenario according to the second solution;
Fig. 9 illustrates an interruption avoidance window indication in a third scenario according to the second solution;
Fig. 10 is a signaling diagram illustrating details of an interruption avoidance window (IAW) configuration and indication;
Fig. 11 is a signaling diagram illustrating details of IAW configuration, indication, and dynamic adaptation;
FIG. 12 illustrates a signaling chart for communication according to some example embodiments of the present disclosure;
FIG. 13 shows a flowchart of an example method implemented at a first apparatus in accordance with some example embodiments of the present disclosure;
FIG. 14 shows a flowchart of an example method implemented at a second apparatus in accordance with some example embodiments of the present disclosure;
FIG. 15 shows a flowchart of an example method implemented at a first apparatus in accordance with some example embodiments of the present disclosure;
FIG. 16 shows a flowchart of an example method implemented at a first apparatus in accordance with some example embodiments of the present disclosure
FIG. 17 illustrates a simplified block diagram of a device that is suitable for implementing example embodiments of the present disclosure; and
FIG. 18 illustrates a block diagram of an example computer readable medium in accordance with some example embodiments of the present disclosure.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. Embodiments described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is within the knowledge of one skilled in the art to affect such feature, structure, or characteristic in connection with other embodiments whether or not explicitly described.

It shall be understood that although the terms "first," "second,"..., etc. in front of noun(s) and the like may be used herein to describe various elements, these elements should not be limited by these terms. These terms are only used to distinguish one element from another and they do not limit the order of the noun(s). For example, a first element could be termed a second element, and similarly, a second element could be termed a first element, without departing from the scope of example embodiments. As used herein, the term "and/or" includes any and all combinations of one or more of the listed terms.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used herein, unless stated explicitly, performing a step "in response to A" does not indicate that the step is performed immediately after "A" occurs and one or more intervening steps may be included.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as New Radio (NR), Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G), 5.5G, the sixth generation (6G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), an NR NB (also referred to as a gNB), a Remote Radio Unit (RRU), a radio header (RH), a remote radio head (RRH), a relay, an Integrated Access and Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some example embodiments, radio access network (RAN) split architecture comprises a Centralized Unit (CU) and a Distributed Unit (DU) at an IAB donor node. An IAB node comprises a Mobile Terminal (IAB-MT) part that behaves like a UE toward the parent node, and a DU part of an IAB node behaves like a base station toward the next-hop IAB node.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the following description, the terms "terminal device", "communication device", "terminal", "user equipment" and "UE" may be used interchangeably.

As used herein, the term "resource," "transmission resource," "resource block," "physical resource block" (PRB), "uplink resource," or "downlink resource" may refer to any resource for performing a communication, for example, a communication between a terminal device and a network device, such as a resource in time domain, a resource in frequency domain, a resource in space domain, a resource in code domain, or any other combination of the time, frequency, space and/or code domain resource enabling a communication, and the like. In the following, unless explicitly stated, a resource in both frequency domain and time domain will be used as an example of a transmission resource for describing some example embodiments of the present disclosure. It is noted that example embodiments of the present disclosure are equally applicable to other resources in other domains.

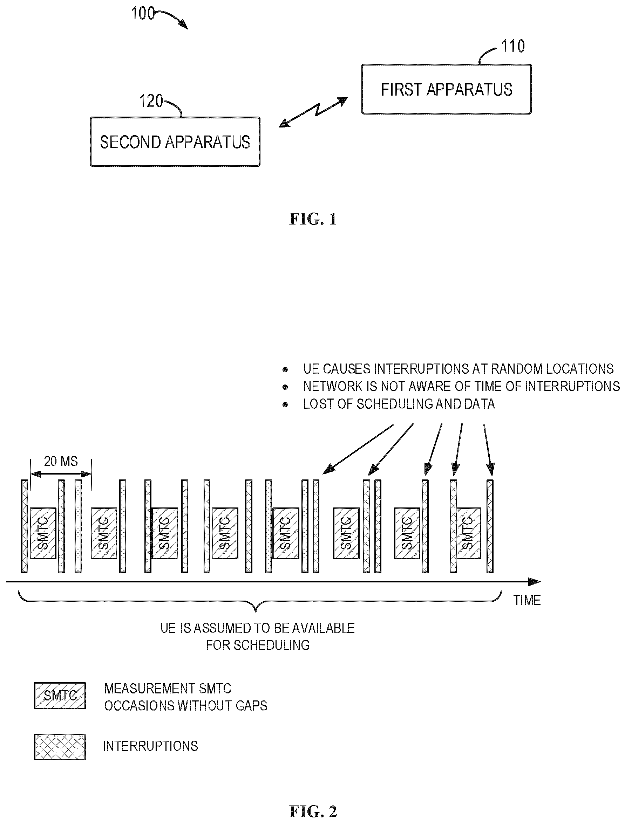

FIG. 1 illustrates an example communication environment 100 in which example embodiments of the present disclosure can be implemented. In the communication environment 100, there are a plurality of communication devices, for example, a first apparatus 110 and a second apparatus 120. These apparatuses can communicate with each other.

It is to be understood that the number of devices and their connections shown in FIG. 1 are only for the purpose of illustration without suggesting any limitation. The communication environment 100 may include any suitable number of devices configured to implementing example embodiments of the present disclosure. By way of example rather than limitation, in some example embodiments, the communication environment 100 may further comprises one or more apparatuses (not shown in FIG. 1).

Communications in the communication environment 100 may be implemented according to any proper communication protocol(s), comprising, but not limited to, cellular communication protocols of the first generation (1G), the second generation (2G), the third generation (3G), the fourth generation (4G), the fifth generation (5G), 5.5G, the sixth generation (6G), and the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

Embodiments of the present disclosure relates to allowing transmission/reception (i.e., scheduling) also in time periods where measurements would otherwise be prioritized by the terminal device. The objectives shown in the following Table 1 are defined.

**Table 1 - Related Objectives**

| | |
|---|---|
| - Specify enhancements to enable transmission/reception in gaps/restrictions that are caused by Radio Resource Management (RRM) measurements (from inter-frequency RRM measurement gaps, or intra-frequency measurements, or other scheduling restrictions etc). [RAN1, RAN2, RAN4] | |
| | - Specify the corresponding measurement gap and scheduling restriction to enable the identified enhancements with RRM performance impact taken into consideration, work being triggered by Liaison Statements (LS). [RAN4] |

It is being currently discussed how to minimize the impact of measurement on data traffic with tight latency requirements, particularly in Extended Reality. In 5G NR measurements for mobility are performed using one of the following approaches:
(1) With measurement gaps: Gaps cause a periodic interruption on data transmission/reception. When data arrives shortly before a gap, or during a gap, it has to be delayed until the gap is over;
(2) Without measurement gaps: Those may cause scheduling restrictions around the symbols to be measured, which may impact the network capability to schedule data with low latency;
(3) Without gaps and with interruptions: It may have the same scheduling restrictions, but also random interruptions may happen. Interruptions are not known by the network, and cause the UE to lose Downlink Control Information (DCI). Losing scheduling DCI would increase latency experienced by the user.

In RAN1 alternatives for skipping measurement gap and scheduling restrictions due to measurements are being discussed. The latest RAN1 agreements which include those alternatives for skipping measurements are shown in the following Table 2.

**Table 2 - Latest RAN1 Agreements**

| **RAN1#117 (May 2024):** | | | | |
|---|---|---|---|---|
| **Agreement** | | | | |
| For solutions based on triggering/enabling by network signaling to enable Tx/Rx in gaps/restrictions that are caused by RRM measurements, select one or combination among only Alt1 and Alt3 from RAN1#116bis. | | | | |
| Proposal 2.1.2-v7 | | | | |
| For solutions based on triggering/enabling by network signaling to enable Tx/Rx in gaps/restrictions that are caused by RRM measurements consider the following alternatives or combinations for further down-selection: | | | | |
| | • Alt. 1: Dynamic indication to enable Tx/Rx in particular gap(s)/restriction(s) that are caused by RRM measurements. | | | |
| | | ∘ FFS: **Alt 1-1:** Explicit indication by DCI to skip a particular gap(s)/restriction(s); | | |
| | | | ▪ Indication is included as part of scheduling DCI: | |
| | | | | • FFS: Bit-field size is one bit; |
| | | | | • FFS: Bit-field size is >1 bit; |
| | | | ▪ Note: Minimum time offset(s) between the end of [the first] received dynamic indication and start of corresponding gap(s)/restriction(s) occasion that is going to be skipped shall be introduced. | |
| | ° FFS: **Alt 1-2:** Explicit indication by DCI to indicate a time window where to skip a particular gap(s)/restriction(s); | | | |
| | | | ▪ Note: Minimum time offset between the end of received dynamic indication and start of gap(s)/restriction(s) occasion in time window that is going to be skipped shall be introduced. | |
| | ∘ FFS: **Alt 1-3:** Implicit indication by DCI scheduling a transmission/reception overlapping with a gap(s)/restriction(s) to skip the gap(s)/restriction(s); | | | |
| | | | ▪ Note: Minimum time offset between the end of received dynamic indication and start of gap(s)/restriction(s) occasion that is going to be skipped shall be introduced. | |
| | | ∘ FFS: DCI format, DCI content, DCI bit-field size; | | |
| | | ∘ FFS: Whether indication is for one or more occasions; | | |
| | | ∘ FFS: How to consider time offset between the end of received dynamic indication and start of gap(s)/restriction(s) occasion that is going to be skipped. | | |
| | • Alt. 3: Semi-static solution to enable TX/RX in gaps/restrictions that are caused by RRM measurements. | | | |
| | | o FFS: **Alt 3-1:** Configure a pattern(s) via RRC to indicate occasions where to skip gaps/restrictions; | | |
| | | | ▪ FFS: Details of pattern: | |
| | | | | • FFS: Pattern is based on periodicity, offset and duration; |
| | | | | • FFS: Pattern is based on a bitmap; |
| | | | ▪ FFS: whether a pattern is applied to all or subset of configured MG configurations/scheduling restrictions. | |
| | | o FFS: **Alt 3-3:** Gaps/restrictions that are caused by RRM measurements are skipped if collided with particular semi-statically pre-configured Tx/Rx occasions. | | |
| | | o FFS: **Alt. 3-4:** Gaps/restrictions that are caused by RRM measurements are skipped based on semi-statically configured priority information for particular semi-statically pre-configured Tx/Rx and/or particular gaps/restrictions. | | |

In general, Alt 1 boils down to a set of options based on a dynamic DCI signaling to indicate whether a UE shall skip a gap to prioritize physical downlink control channel (PDCCH)/physical downlink shared channel (PDSCH) decoding and physical uplink shared channel (PUSCH)/physical uplink control channel (PUCCH) transmission. In Alt3 a semi-static fixed skipping pattern is configured via RRC, hence resulting in a less dynamic solution due to the higher RRC reconfiguration time.

Another relevant state of the art are the measurements without gaps using interruptions. In Release (Rel)-18 the requirements for measurements without gaps with interruptions were defined in RAN4 and with signaling support by RAN2. Some UEs may perform measurements without gaps in certain frequency carriers depending on the availability of a spare Radio Frequency (RF) chain. In one example, if one UE is not configured with all the component carriers (CCs) that it supports in carrier aggregation, it may use one of the unused RF chains for performing measurements. When doing so, turning on/off and retuning of this spare RF chain may cause interference in other RF chains which result in lost of few orthogonal frequency division multiplexing (OFDM) symbols.

Fig. 2 illustrates an example of measurements without gaps. Fig. 2 shows one example where a UE is causing one interruption before and after one SMTC (synchronization signal (SS)/physical broadcast channel (PBCH) measurement timing configuration). In this example, the UE measures the signals in the SMTC occasions, and depending on the target frequency of the SMTC being measured, it may cause interruptions or not. The exact time instant of those interruptions is not known by the network.

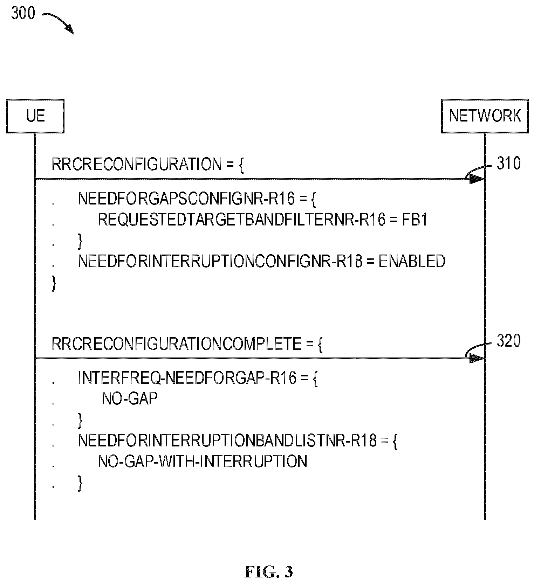

Fig. 3 illustrates a signaling diagram 300 where a UE indicates that it is capable of performing measurements without gaps with interruptions. In other words, Fig. 3 shows a signaling diagram where a UE reports the need for gaps and interruptions in accordance with Rel-18 NeedForinterruption framework. As shown in Fig. 3, the network sends 310 a RRCReconfiguration message, including NeedForGapsConfigNR and NeedForInterruptionConfigNR. In response to that message, the UE sends 320 a message containing for each requested target band filter the information that no gaps are needed in interFreq-needForGap. It also sends the information that interruptions are needed as part of the information element (IE) needForinterruptionBandListNR.

Measurements without gaps are good alternatives for XR, however, in many cases those measurements rely on interruptions to be performed. Interruptions are typically non-deterministic and random in nature and caused autonomously by the UE on a need basis. As a result, the impact of an interruption is longer than its duration, since it is causing retransmissions of the potentially lost packet. As such, there is a problem, i.e., how to take advantage of the measurement skipping framework (for example, the framework from 3^{rd} generation Partnership Project RAN1 agreement) for mitigating interruptions caused by measurements without gaps.

Several solutions are proposed herein to at least address the above-mentioned problems.

There is provided solutions for communication, in which the network indicates to the UE when the UE shall receive possible Downlink (DL) data (e.g., via PDSCH) and/or control information (e.g., via PDCCH) without any interruptions. Hence, the UE may receive without interruptions in DL, and if an interruption is needed to perform a measurement, this interruption is either moved to avoid impacting transmission/reception, or a measurement occasion is skipped. Such indication may be repeated, and each indication may indicate an applicability time.

In a first solution, the network sends a skipping command, which indicates to the UE not to perform any actions which does not allow the UE to monitor the DL without restrictions. When skipping period is over, the UE may have DL reception restrictions as currently defined. The corresponding measurement delay is extended.

In a second solution, an XR scheduling command indicates that the UE should not cause interruptions during a time window. This time window defines a duration within which interruptions are not allowed or shall be avoided. In the following, such a time window may be referred to as interruption avoidance window (IAW) or an interruption free window. The behavior changes depending on the location of the time window in relation to for example the next SMTC or measurement occasion. In this case, the UE shall ensure unrestricted reception during the window. If the time window is too close to or overlap with the next SMTC, the UE shall skip the next SMTC occasion, and the measurement delay is extended. The UE must move any interruption, which would otherwise be within the time window, to before or after the interruption free window. If the time window happens before the next SMTC occasion, and there is enough time between the time window and the SMTC occasion, the UE must move interruptions to outside of this time window and perform the measurement of the next SMTC occasion.

In a third solution, the network sends a skipping command that includes an indication for unrestricted reception as in the second solution and, additionally, an indication to modify the time window of unrestricted reception. In one implementation of this solution, the modification of the time window of unrestricted reception is implemented as set of codewords encoded as a sequence of bits. Codewords might indicate to double, halve, or maintain the current value of the time window of unrestricted reception. In addition to the steps indicated in the second solution, the UE shall modify the time window of unrestricted reception as indicated by the network.

Example embodiments of the present disclosure will be described in detail below with reference to the accompanying drawings.

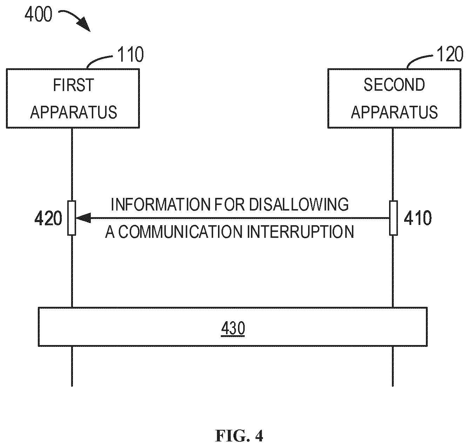

FIG. 4 illustrates a signaling chart 400 for communication according to some example embodiments of the present disclosure. For the purposes of discussion, the signaling chart 400 will be discussed with reference to FIG. 1, for example, by using the first apparatus 110 and the second apparatus 120. In some example embodiments, the first apparatus 110 may be or be comprised in a terminal device (such as UE or the like), and the second apparatus 120 may be or be comprised in a network device (such as gNB or the like).

In the signaling chart 400, the second apparatus 120 transmits 410, to the first apparatus 110, information for disallowing a communication interruption associated with a measurement. Correspondingly, the first apparatus 110 receives 420 the information from the second apparatus 120. In some example embodiments, the information may indicate that the communication interruption associated with the measurement is not allowed. By way of example, the information may indicate a time window during which the communication interruption is not allowed. Alternatively, the information may indicate that the communication interruption associated with the measurement is to be skipped. By way of example, the information may indicate a time window during which the communication interruption shall be skipped.

In some example embodiments corresponding to the above-mentioned first solution, the received information may comprise a command indicating the second apparatus 120 not to perform an action causing the communication interruption. In this case, the first apparatus 110 may skip a first number of measurement windows after receiving the command. An example of the measurement window may be an SMTC window or occasion. In one example embodiment, the first number may be based on a predefined number. By way of example, the standard may specify how many measurement occasions shall be skipped if a skipping command is received. Additionally or alternatively, the first number may be based on a number configured by the second apparatus 120. By way of example, the second apparatus 120 may preconfigure how many measurement occasions shall be skipped if a skipping command is received. In an additional or alternative example embodiment, the first number may be based on a number indicated in the command. By way of example, the skipping command may indicate how many measurement occasions shall be skipped. It should be understood that the above examples are described merely for purpose of description. The scope of the present disclosure is not limited in this respect.

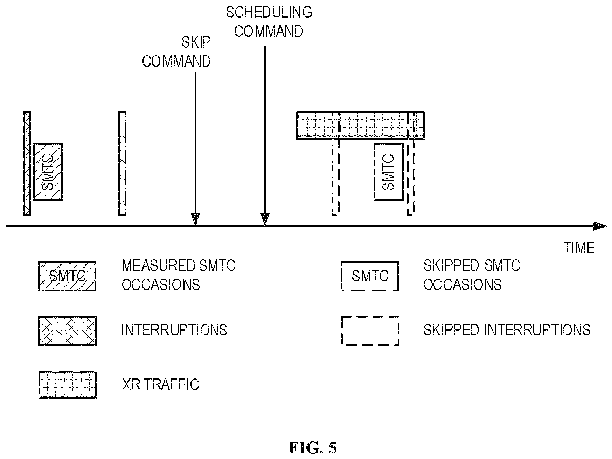

Example embodiments of the first solution will be described in detail with reference to Fig. 5, which illustrates a schematic diagram of measurement skipping according to the first solution. In the example shown in Fig. 5, the network identifies that it needs to schedule XR traffic in slots where the UE is likely to cause interruptions due to gapless measurements. By using the first solution, the network may send a skip command to the UE. As a response, the UE is not allowed to turn on or retune an RF chain that causes interruptions and the next measurement occasion may be skipped. If the network does not send the measurement skipping command in a next SMTC occasion, the UE resumes measurement using interruptions.

In some example embodiments corresponding to the above-mentioned second solution, the received information may indicate a time window during which the communication interruption is not allowed. In this case, the second apparatus 120 may transmit, to the first apparatus 110, configuration information for the time window and a window activation command for the time window. Correspondingly, the first apparatus 110 may receive the configuration information from the second apparatus 120. The configuration information and the window activation command define and trigger the time window in combination.

In one example embodiment, the configuration information may indicate a duration of the time window and a starting time of the time window. By way of example, the starting time of the time window may be an offset of the time window to reception of the window indication, or a specific time point from which the time window starts. In addition, the window activation command may comprise an activation indication of the time window. In one further example embodiment, the configuration information may indicate a duration of the time window, and the window activation command may indicate a starting time of the time window to activate the time window. In a still further example embodiment, the configuration information may comprise an enabling indication of the time window, and the window activation command may indicate a duration of the time window and a starting time of the time window to activate the time window.

Alternatively, instead of the duration of the time window, an ending time of the time window may be indicated. In this case, the duration of the time window may be determined based on the starting time and ending time of the time window. It should be understood that the above illustrations are described merely for purpose of description. The scope of the present disclosure is not limited in this respect.

In some alternative example embodiments, the information received at 420 may be used to trigger a predefined time window during which the communication interruption is not allowed. By way of example rather than limitation, this time window may be hardcoded in the specification or predetermined in any other suitable manner.

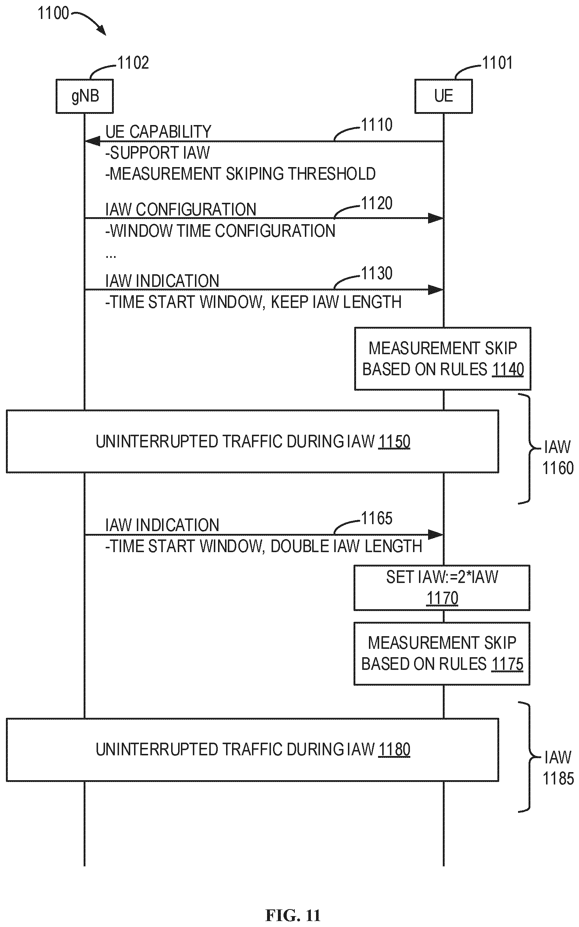

In some example embodiments corresponding to the above-mentioned third solution, the second apparatus 120 may further transmit, to the first apparatus 110, an update indication to update a duration for which the communication interruption is not allowed. In addition ,the second apparatus 120 may determine a further time window with the updated duration based on the update indication. Correspondingly, the first apparatus 110 may further receive the update indication from the second apparatus 120, and determine the further time window with the updated duration based on the update indication. Thereby, the first and the second apparatuses 110 and 120 may perform, within the updated time window, communication with each other. This will be described in detail below with reference to Fig. 11.

In some example embodiments, the first apparatus 110 may transmit, to the second apparatus 120, capability information indicating a support in handling the communication interruption flexibly, such as, skipping the communication interruption, moving the communication interruption, and/or the like. In this case, the second apparatus 120 may receive the capability information from the first apparatus 110. For example, the capability information may further indicate a minimum time difference between a time window where the communication interruption is not allowed and a measurement window.

In addition, at 430, the first apparatus 110 and the second apparatus 120 perform communication with each other based on the information. Based on the above discussion, it can be seen that at 430, the communication may be performed without a communication interruption.

In view of the above, the proposed solution can advantageously protect the important transmissions to the first apparatus, and thus avoid additional delay that may be caused by interruptions.

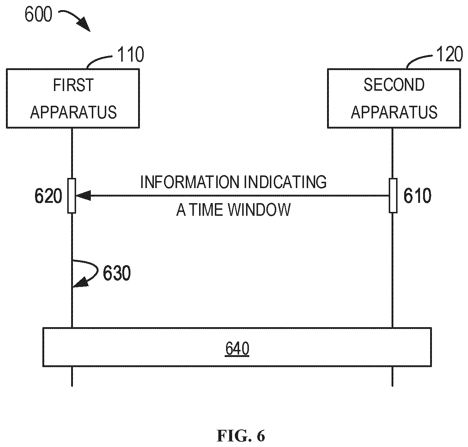

FIG. 6 illustrates a signaling chart 600 for communication according to some example embodiments of the present disclosure. For the purposes of discussion, the signaling chart 600 will be discussed with reference to FIG. 1, for example, by using the first apparatus 110 and the second apparatus 120. In some example embodiments, the first apparatus 110 may be or be comprised in a terminal device (such as UE or the like), and the second apparatus 120 may be or be comprised in a network device (such as gNB or the like).

In the signaling chart 600, the second apparatus 120 transmits 610, to the first apparatus 110, information indicating a time window during which a communication interruption associated with a measurement is not allowed. Correspondingly, the first apparatus 110 receives 620 the information from the second apparatus 120.

Furthermore, the first apparatus 110 determines 630 a temporal relation between the time window and a measurement window for the measurement, and performs 640 communication with the second apparatus 120 based on the temporal relation.

In some example embodiments, the first apparatus 110 may determine whether the time window is before the measurement window. In this case, the communication interruption occurs before the measurement window when performing that measurement. If it is determined that the time window is before the measurement window, the first apparatus 110 may determine a first time difference between an ending time of the time window and a starting time of the measurement window.

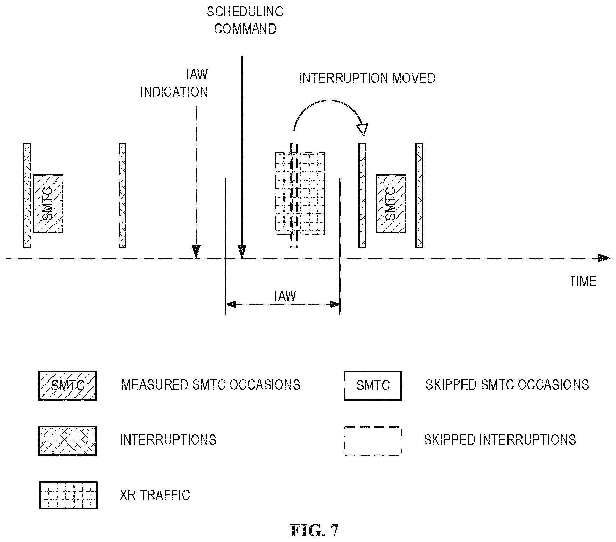

If it is determined that the time difference exceeds a first threshold, the first apparatus 110 may shift the communication interruption to a time location between the ending time of the time window and the starting time of the measurement window. If it is determined that the time difference is below the first threshold, skip the measurement window to avoid the communication interruption. This is described in detail with reference to Fig. 7.

Fig. 7 illustrates an interruption avoidance window indication in a first scenario according to the second solution. In this first scenario, a distance in time domain from the IAW to SMTC occasion is long enough and measurement is not skipped. For example, the distance in time domain may refer to a time domain distance or an absolute time difference between the end of the IAW and the start of the next SMTC occasion. In the example shown in Fig. 7, the IAW happens before the next SMTC occasion, and the distance between IAW and SMTC occasion is larger than a threshold. In this example, if no IAW trigger was send by the second apparatus 120 the first apparatus 110 may cause an interruption during the IAW, as shown in the dashed box labeled as "skipped interruptions". However, as there is enough time between the IAW and the SMTC occasion in this example, the first apparatus 110 may schedule the retuning of a spare RF chain to avoid the IAW. As a result, the second apparatus 120 may schedule during the IAW without unpredictable interruptions and prioritize low latency traffic. Additionally, since the first apparatus 110 may still perform retuning of the spare RF chain, there is no impact on the measurement delay, since the next SMTC occasion may be measured normally.

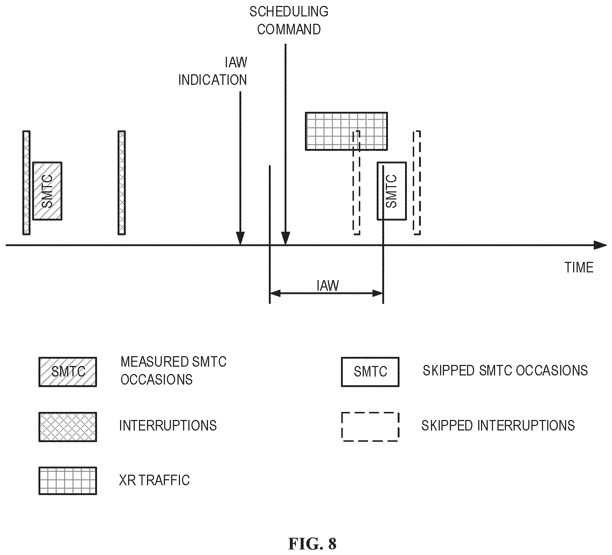

In some example embodiments, the first apparatus 110 may determine whether the time window is overlapped with the measurement window. If it is determined that the time window is overlapped with the measurement window, the first apparatus 110 may skip the measurement window to avoid the communication interruption. This is described in detail with reference to Fig. 8.

Fig. 8 illustrates an interruption avoidance window indication in a second scenario according to the second solution. In this second scenario, a distance from IAW to SMTC is small or overlapped with SMTC, and a measurement occasion is skipped. In the example shown in Fig. 8, the IAW command is sent and the IAW window is close to the SMTC or overlapping with the SMTC. In this case, the first apparatus 110 may skip the next SMTC occasion in order to prioritize the XR traffic. By skipping the measurement occasion, it is expected that the measurement delay is extended.

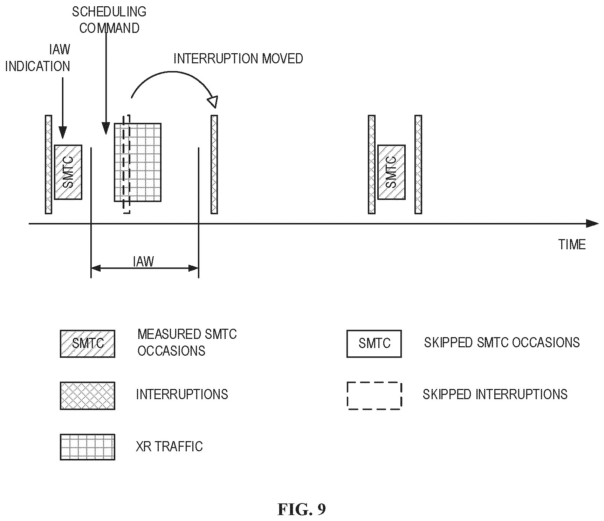

In some example embodiments, the first apparatus 110 may determine whether the time window is after the measurement window. In this case, the communication interruption occurs after the measurement window when performing this measurement. If it is determined that the time window is after the measurement window, the first apparatus 110 may shift the communication interruption to a time location outside the time window. This is described in detail with reference to Fig. 9.

Fig. 9 illustrates an interruption avoidance window indication in a third scenario according to the second solution. In the third scenario, the first apparatus 110 has to move an interruption after SMTC due to an IAW. In the example shown in Fig. 9, the interruption after the SMTC occasion is shifted. In this example, the IAW trigger command is sent during the SMTC, and the first apparatus 110 is not expected to cause interruptions during the IAW. This causes the first apparatus 110 to move the next interruption to happen after the IAW without impacting on the measurement of the ongoing SMTC occasion.

In addition, if it is determined that the time window is after the measurement window, the first apparatus 110 may determine a second time difference between a starting time of the time window and an ending time of the measurement window. If it is determined that the second time difference is below a second threshold, the first apparatus 110 may shift the communication interruption to the time location after the time window. If it is determined that the second time difference exceeds the second threshold, the first apparatus 110 may shift the communication interruption to a time location between the starting time of the time window and the ending time of the measurement window. By way of example, with reference to Fig. 9, the first apparatus 110 may compare whether the starting time of IAW is far away from the ending time of the SMTC occasion. If not, the interruption may be moved after the IAW. If the starting time of IAW is far away from the ending time of the SMTC occasion, the interruption may be moved before the starting of the IAW.

In some example embodiments, the first apparatus 110 may further receive, from the second apparatus 120, configuration information for the time window and a window activation command for the time window. The configuration information and the window activation command define and trigger the time window in combination, and have been described in detail above with reference to Fig. 4. Therefore, the description related to the configuration information and the window activation command will not be repeated here.

Based on the above discussion, it can be seen that at 640, the communication may be performed without a communication interruption. In view of the above, the proposed solution can advantageously protect the important transmissions to the first apparatus, and thus avoid additional delay that may be caused by interruptions.

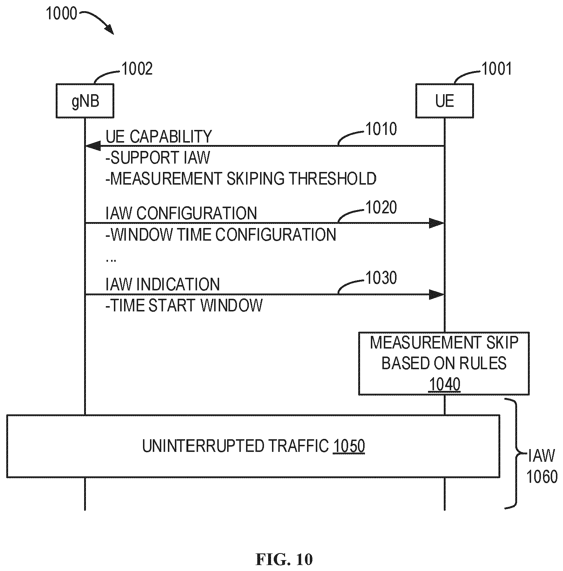

The solutions presented in FIGS. 4 and 6 will be described in more details below with reference to FIGS. 10-11.

The second solution will be described in detail below. In this second solution, a more dynamic approach is assumed considering the interruption avoidance window (IAW) location in relation to the SMTC window. If there is a time interval of X millisecond (ms) between the IAW and the SMTC, the UE may have enough time to perform RF retuning and still perform measurements on the next SMTC occasion. This may be done by moving the interruption location to an area where interruptions are allowed. Likewise, if the IAW is overlapping with an area where interruptions are typically caused after the SMTC occasion, the UE might delay the time when retune/power off of the spare RF chain to after the duration if the IAW.

In some example embodiments, the network may send the IAW indication with a window where the UE did not schedule any interruptions. In this case, there is no action needed by the UE, and it may proceed with measuring normally, while the XR traffic is maintained during the IAW.

For the above-described second solution, some options are proposed for enhancing the measurement skipping signaling. In a first option, the UE may inform the network of the minimum distance between the IAW and an SMTC window. In addition, the measurement skipping signaling may include information on a start of the IAW and/or a duration of the IAW. In a second option, the minimum distance between IAW and SMTC window may be predetermined, e.g., defined in 3GPP specifications. The IAW may be hardcoded in the specifications and triggered using the same skipping command that is used for other types of measurements (e.g., measurements with gaps).

Fig. 10 is a signaling diagram 1000 illustrating details of IAW configuration and indication. Fig. 10 shows one example of how IAW may be configured and triggered. In example embodiments discussed with respect to FIG. 10, the first apparatus 110, which may be a UE, is denoted by UE 1001, and the second apparatus 120, which may be a network device, is denoted by gNB 1002.

In the signaling diagram 1000, at 1010, the UE 1001 sends a list of UE capabilities including support of IAW. This message may include also details of the measurements skipping threshold related to IAW. At 1020, the gNB 1002 configures an IAW parameter(s). By way of example, this IAW configuration may be realized using RRC signaling. The IAW parameter may comprise a duration of IAW, an IAW offset after IAW indication, and/or the like.

At 1030, the gNB 1002 transmits an IAW indication to the UE 1001. In this step, the gNB 1002 triggers an IAW. The contents of this message depend on what configuration option is used at 1020. These are listed as follows:
Option 1: Simple indication of IAW activation. In this case, the UE 1001 knows the IAW start and end times based on the time that the IAW is received, and the duration and offset configured at 1020.
Option 2: Start time of IAW. In this option, the UE 1001 knows the configured IAW duration from the network configuration at 1020.
Option 3: IAW start time and duration. In this option, the IAW is enabled by the gNB 1002 at 1020, but the parameters related to IAW duration are sent for every new IAW indication. This option ensures flexibility.
Option 4: Start time of IAW and an indication whether IAW duration is changed. This option is defined according to the above-mentioned third solution.

At 1040, the UE 1001 processes skipping rules. In this step, the UE 1001 verifies the rules for measurement skipping based on the IAW. Conditions for interruptions and measurements are described with reference to Fig. 4, Fig. 5, and Fig. 6.

At 1050, the gNB 1002 and the UE 1001 exchange control and data messages without interruptions. Thereby, DL/UL traffic without interruptions is achieved.

An interruption avoidance window 1060 is shown in Fig. 10. In this window no interruptions are allowed for the UE 1001. The UE 1001 may perform measurements that do not cause interruptions. Alternatively, the UE 1001 may perform measurements if the interruptions may be moved to outside of the IAW.

In view of the above, the proposed solution can advantageously protect the important transmissions to the UE, and avoid additional delay that may be caused by interruptions. Since the timing of the interruptions is not known to the network, the network uses the IAW in order to achieve a more predictable interruption behavior. In some situations, the network may identify that the delay budget is good and it could afford retransmissions due to interruptions. In that case, there is no need to extend the measurement delay by preventing the interruption.

The third solution will be described in detail. In this third solution, the network can dynamically adapt the length of the interruption avoidance window (IAW). This enables the network to change the duration of the unrestricted UE reception according to, e.g., the amount of traffic that needs the be served (or stored in the buffer), the channel status, and the mobility sate of the UE. If any interruption during the transmission of the protocol data units (PDUs) stored in the buffer prevents fulfilling the PDU Set Delay Budget (PDSB), then the network may indicate to increase the IAW.

In one example embodiment, the modification of the IAW may be implemented as set of codewords encoded as a sequence of bits. A possible definition of the codewords is indicated in the following Table 3.

**Table 3 -Definition of Codewords**

| **Codeword (sequence of bits)** | **Description** |
|---|---|
| 00 | Do not change the length of the IAW |
| 01 | Double the length of the IAW |
| 10 | Halve the length of the IAW |

Fig. 11 is a signaling diagram 1100 illustrating details of IAW configuration, indication, and dynamic adaptation. Fig. 11 shows one example of how IAW can be configured, triggered, and modified. In example embodiments discussed with respect to FIG. 11, the first apparatus 110, which may be a UE, is denoted by UE 1101, and the second apparatus 120, which may be a network device, is denoted by gNB 1102.

In the signaling diagram 1100, at 1110, the UE 1101 sends a list of UE capabilities including support of IAW. This message may include also details of the measurements skipping threshold related to IAW. At 1120, the gNB 1102 configures an IAW parameter(s). By way of example, this IAW configuration may be realized using RRC signaling. The IAW parameter may comprise a duration of IAW, an IAW offset after IAW indication, and/or the like.

At 1130, the gNB 1102 transmits an IAW indication to the UE 1101. In this step, the gNB 1102 triggers an IAW and indicates to maintain the current IAW length. The contents of this message depend on what configuration option is used at 1120. These are listed as follows:
Option 1: Simple indication of IAW activation. In this case, the UE 1101 knows the IAW start and end times based on the time that the IAW is received, and the duration and offset configured at 1120.
Option 2: Start time of IAW. In this option, the UE 1101 knows the configured IAW duration from the network configuration at 1120.
Option 3: IAW start time and duration. In this option, the IAW is enabled by the gNB 1102 at 1120, but the parameters related to IAW duration are sent for every new IAW indication. This option ensures flexibility.
Option 4: Start time of IAW and an indication whether IAW duration is changed. This option is defined according to the above-mentioned third solution.

At 1140, the UE 1101 processes skipping rules. In this step, the UE 1101 verifies the rules for measurement skipping based on the IAW. Conditions for interruptions and measurements are described with reference to Fig. 4, Fig. 5, and Fig. 6.

At 1150, the gNB 1102 and the UE 1101 exchange control and data messages without interruptions. Thereby, DL/UL traffic without interruptions can be achieved.

An interruption avoidance window 1160 is shown in Fig. 11. In this window, no interruptions are allowed for the UE 1101. The UE 1101 may perform measurements that do not cause interruptions. Alternatively, the UE 1101 may perform measurements if the interruptions may be moved to outside of the IAW.

At 1165, the gNB 1102 may further transmit an IAW indication to the UE 1101. In this step, the gNB 1102 triggers an IAW and provides an indication to the UE 1101 to adapt the length/duration of the IAW. In the specific example depicted in Fig. 11, the gNB 1102 indicate to the UE 1101 to double the length of the IAW. It should be understood that this specific example are described merely for purpose of description. The scope of the present disclosure is not limited in this respect.

At 1170, the UE 1101 may determine the length/duration of IAW. In this step, the UE 1101 determines the duration of the IAW according to the content of the indication received at 1165.

At 1175, the UE 1101 performs measurement skip. In this step, the UE 1101 applies the rules for interruptions and measurement according as described above for the whole duration of the IAW.

At 1180, the gNB 1102 may schedule the UE 1101 at any time, since the UE 1101 avoid the execution of any interruption and measurement. Thereby, uninterrupted reception can be achieved.

A further interruption avoidance window 1185 is shown in Fig. 11. In this window, no interruptions are allowed for the UE 1101. The UE 1101 may perform measurements that do not cause interruptions. Alternatively, the UE 1101 may perform measurements if the interruptions may be moved to outside of the IAW.

In view of the above, the proposed solution can advantageously protect the important transmissions to the UE, and avoid additional delay that may be caused by interruptions. Since the timing of the interruptions is not known to the network, the network uses the IAW in order to achieve a more predictable interruption behavior. In some situations, the network may identify that the delay budget is good and it could afford retransmissions due to interruptions. In that case, there is no need to extend the measurement delay by preventing the interruption.

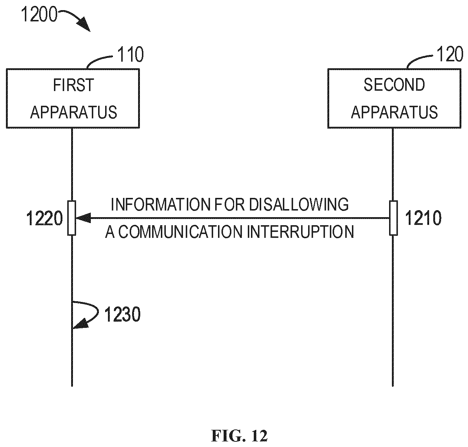

The general concept of the proposed solutions have been described above with reference to FIGS. 4 to 11. The implementation details of the concept will be described in detail below with reference to FIG. 12.

FIG. 12 illustrates a signaling chart 1200 for communication according to some example embodiments of the present disclosure. For the purposes of discussion, the signaling chart 1200 will be discussed with reference to FIG. 1, for example, by using the first apparatus 110 and the second apparatus 120. In some example embodiments, the first apparatus 110 may be or be comprised in a terminal device (such as UE or the like), and the second apparatus 120 may be or be comprised in a network device (such as gNB or the like).

In the signaling chart 1200, the second apparatus 120 transmits 1210, to the first apparatus 110, information for disallowing a communication interruption associated with a measurement. Correspondingly, the first apparatus 110 receives 1220 the information from the second apparatus 120.

Moreover, the first apparatus 110 handles 1230 respective measurements on one or more measurement objects based on the received information and object information. The object information at least indicates whether the one or more measurement objects cause a communication interruption. In one example embodiment, the object information may comprise an indication of one or more target frequencies to be measured. A switching between a target frequency of the one or more target frequencies and a serving cell frequency causes a communication interruption. By way of example rather than limitation, the first apparatus 110 may have a mapping between target frequencies to be measured and serving cell frequencies that cause interruption. This mapping information may be implemented using a table containing serving frequencies in each row, and frequencies to measure in each column, and for each frequency combination the UE stores the information whether interruptions are needed or not. Alternatively, the object information may comprise pattern information indicating a pattern of a communication interruption caused by a measurement object of the one or more measurement objects. For example, the pattern may be a statistical pattern in the time domain, for example defining particular one or more periodicities and/or interruption time lengths for different measurement frequencies. It should be understood that the above illustrations are described merely for purpose of description. The scope of the present disclosure is not limited in this respect.

In some example embodiments, the first apparatus 110 may determine, from the one or more measurement objects based on the object information, a first measurement object that does not cause a communication interruption. Moreover, the first apparatus 110 may perform a first measurement on the first measurement object at least partially within a first time window during which a communication interruption is not allowed. For example, the first time window may comprise a measurement window immediately after receiving the information, or any other suitable measurement window. By way of example, the first apparatus 110 may determine a frequency which does not cause interruption, and then performs the measurement in the next measurement occasion on the determined frequency.

In some example embodiments, the first apparatus 110 may determine a second time window during which a communication interruption is allowed. The first apparatus 110 may further determine, from the one or more measurement objects based on the object information, a first measurement object that does not cause a communication interruption and a second measurement object that causes a communication interruption. During the second time window, the first apparatus 110 may at least partially perform a first measurement on the first measurement object and a second measurement on the second measurement object based on respective priorities of the first and second measurements. A priority of the first measurement is lower than a priority of the second measurement.

In some example embodiments, the first apparatus 110 may determine, from the one or more measurement objects based on the object information, a second measurement object that causes a communication interruption. If it is determined that a communication interruption associated with a second measurement on the second measurement object is not allowed, the first apparatus 110 may handle the second measurement based on the received information. For example, the received information may indicate a time window during which a communication interruption associated with a measurement is not allowed. In this case, the first apparatus 110 may determine a temporal relation between the time window and a measurement window for the second measurement, and handle the second measurement based on the temporal relation.

By way of example, the first apparatus 110 may determine whether the time window is overlapped with the measurement window. If it is determined that the time window is overlapped with the measurement window, the first apparatus 110 may skip the measurement window. If it is determined that the time window is not overlapped with the measurement window, the first apparatus 110 may shift the communication interruption associated with the second measurement to a time location outside the time window, and perform the second measurement within the measurement window based on the shifting. Details of this concept have been described in detail above with reference to FIGS. 7-9, and thus will not be repeated here.

By way of example rather than limitation, if the first apparatus 110 receives a skipping command, or an indication of the window without interruption, the first apparatus 110 performs only the measurements which are not causing interruptions for the interruption free occasion. In this case, the first apparatus 110 follows the steps below:
(1) The first apparatus 110 has a mapping between target frequencies to be measured and serving cell frequencies that cause interruption;
(2) After the skipping/interruption avoidance window(IAW) command, the first apparatus 110 identifies which measurement objects cause interruptions;
(3) The first apparatus 110 performs the measurement in the next measurement occasion on a target frequency that doesn't cause interruptions; and
(4) During measurement occasions where interruptions are allowed, the first apparatus 110 prioritizes to conclude measurements that need interruptions.

In view of the above, the proposed solution can advantageously protect the important transmissions to the first apparatus, and thus avoid additional delay that may be caused by interruptions.

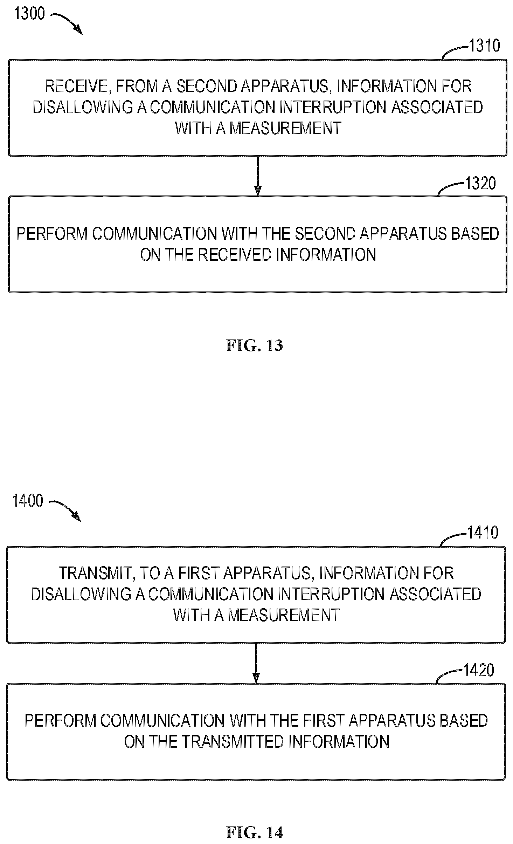

FIG. 13 shows a flowchart of an example method 1300 implemented at a first apparatus in accordance with some example embodiments of the present disclosure. For the purpose of discussion, the method 1300 will be described from the perspective of the first apparatus 110 in FIG. 1.

At block 1310, the first apparatus 110 receives, from a second apparatus, information for disallowing a communication interruption associated with a measurement.

At block 1320, the first apparatus 110 performs communication with the second apparatus based on the received information.

In some example embodiments, the received information indicates a time window during which the communication interruption is not allowed.

In some example embodiments, the method 1300 further comprises: receiving, from the second apparatus, configuration information for the time window and a window activation command for the time window, wherein the configuration information and the window activation command define and trigger the time window in combination.

In some example embodiments, the configuration information indicates a duration of the time window and a starting time of the time window, and the window activation command comprises an activation indication of the time window. Alternatively, the configuration information indicates a duration of the time window, and the window activation command indicates a starting time of the time window to activate the time window. In some further example embodiments, the configuration information comprises an enabling indication of the time window, and the window activation command indicates a duration of the time window and a starting time of the time window to activate the time window.

In some example embodiments, the received information is used to trigger a predefined time window during which the communication interruption is not allowed.

In some example embodiments, the method 1300 further comprises: receiving, from the second apparatus, an update indication to update a duration for which the communication interruption is not allowed; determining a further time window with the updated duration based on the update indication; and performing, within the updated time window, communication with the second apparatus.

In some example embodiments, the received information comprises a command indicating the second apparatus not to perform an action causing the communication interruption.

In some example embodiments, the method 1300 further comprises: skipping a first number of measurement windows after receiving the command, wherein the first number is based on at least one of: a predefined number, a number configured by the second apparatus, or a number indicated in the command.

In some example embodiments, the method 1300 further comprises: transmitting, to the second apparatus, capability information indicating a support in skipping the communication interruption.

In some example embodiments, the capability information further indicates a minimum time difference between a time window where the communication interruption is not allowed and a measurement window.

In some example embodiments, the first apparatus is or is comprised in a terminal device, and the second apparatus is or is comprised in a network device.

FIG. 14 shows a flowchart of an example method 1400 implemented at a second apparatus in accordance with some example embodiments of the present disclosure. For the purpose of discussion, the method 1400 will be described from the perspective of the second apparatus 120 in FIG. 1.

At block 1410, the second apparatus 120 transmits, to a first apparatus, information for disallowing a communication interruption associated with a measurement.

At block 1420, the second apparatus 120 performs communication with the first apparatus based on the transmitted information.

In some example embodiments, the transmitted information indicates a time window during which the communication interruption is not allowed.

In some example embodiments, the method 1400 further comprises: transmitting, to the first apparatus, configuration information for the time window and a window activation command for the time window, wherein the configuration information and the window activation command define and trigger the time window in combination.

In some example embodiments, the configuration information indicates a duration of the time window and a starting time of the time window, and the window activation command comprises an activation indication of the time window. Alternatively, the configuration information indicates a duration of the time window, and the window activation command indicates a starting time of the time window to activate the time window. In some further example embodiments, the configuration information comprises an enabling indication of the time window, and the window activation command indicates a duration of the time window and a starting time of the time window to activate the time window.

In some example embodiments, the transmitted information is used to trigger a predefined time window during which the communication interruption is not allowed.

In some example embodiments, the method 1400 further comprises: transmitting, to the first apparatus, an update indication to update a duration for which the communication interruption is not allowed; determining a further time window with the updated duration based on the update indication; and performing, within the updated time window, communication with the first apparatus.

In some example embodiments, the transmitted information comprises a command indicating the first apparatus not to perform an action causing the communication interruption.

In some example embodiments, the method 1400 further comprises: receiving, from the first apparatus, capability information indicating a support in skipping the communication interruption.

In some example embodiments, the capability information further indicates a minimum time difference between a time window where the communication interruption is not allowed and a measurement occasion.

In some example embodiments, the first apparatus is or is comprised in a terminal device, and the second apparatus is or is comprised in a network device.

In some example embodiments, a first apparatus capable of performing any of the method 1300 (for example, the first apparatus 110 in FIG. 1) may comprise means for performing the respective operations of the method 1300. The means may be implemented in any suitable form. For example, the means may be implemented in a circuitry or software module. The first apparatus may be implemented as or included in the first apparatus 110 in FIG. 1.

In some example embodiments, the first apparatus comprises: means for receiving, from a second apparatus, information for disallowing a communication interruption associated with a measurement; and means for performing communication with the second apparatus based on the received information.

In some example embodiments, the received information indicates a time window during which the communication interruption is not allowed.

In some example embodiments, the first apparatus comprises: means for receiving, from the second apparatus, configuration information for the time window and a window activation command for the time window, wherein the configuration information and the window activation command define and trigger the time window in combination.

In some example embodiments, the configuration information indicates a duration of the time window and a starting time of the time window, and the window activation command comprises an activation indication of the time window. Alternatively, the configuration information indicates a duration of the time window, and the window activation command indicates a starting time of the time window to activate the time window. In some further example embodiments, the configuration information comprises an enabling indication of the time window, and the window activation command indicates a duration of the time window and a starting time of the time window to activate the time window.

In some example embodiments, the received information is used to trigger a predefined time window during which the communication interruption is not allowed.

In some example embodiments, the first apparatus comprises: means for receiving, from the second apparatus, an update indication to update a duration for which the communication interruption is not allowed; means for determining a further time window with the updated duration based on the update indication; and means for performing, within the updated time window, communication with the second apparatus.

In some example embodiments, the received information comprises a command indicating the second apparatus not to perform an action causing the communication interruption.

In some example embodiments, the first apparatus comprises: means for skipping a first number of measurement windows after receiving the command, wherein the first number is based on at least one of: a predefined number, a number configured by the second apparatus, or a number indicated in the command.

In some example embodiments, the first apparatus comprises: means for transmitting, to the second apparatus, capability information indicating a support in skipping the communication interruption.

In some example embodiments, the capability information further indicates a minimum time difference between a time window where the communication interruption is not allowed and a measurement window.

In some example embodiments, the first apparatus is or is comprised in a terminal device, and the second apparatus is or is comprised in a network device.

In some example embodiments, a second apparatus capable of performing any of the method 1400 (for example, the second apparatus 120 in FIG. 1) may comprise means for performing the respective operations of the method 1400. The means may be implemented in any suitable form. For example, the means may be implemented in a circuitry or software module. The second apparatus may be implemented as or included in the second apparatus 120 in FIG. 1.

In some example embodiments, the second apparatus comprises: means for transmitting, to a first apparatus, information for disallowing a communication interruption associated with a measurement; and means for performing communication with the first apparatus based on the transmitted information.

In some example embodiments, the transmitted information indicates a time window during which the communication interruption is not allowed.

In some example embodiments, the second apparatus comprises: means for transmitting, to the first apparatus, configuration information for the time window and a window activation command for the time window, wherein the configuration information and the window activation command define and trigger the time window in combination.

In some example embodiments, the configuration information indicates a duration of the time window and a starting time of the time window, and the window activation command comprises an activation indication of the time window. Alternatively, the configuration information indicates a duration of the time window, and the window activation command indicates a starting time of the time window to activate the time window. In some further example embodiments, the configuration information comprises an enabling indication of the time window, and the window activation command indicates a duration of the time window and a starting time of the time window to activate the time window.

In some example embodiments, the transmitted information is used to trigger a predefined time window during which the communication interruption is not allowed.

In some example embodiments, the second apparatus comprises: means for transmitting, to the first apparatus, an update indication to update a duration for which the communication interruption is not allowed; means for determining a further time window with the updated duration based on the update indication; and means for performing, within the updated time window, communication with the first apparatus.

In some example embodiments, the transmitted information comprises a command indicating the first apparatus not to perform an action causing the communication interruption.

In some example embodiments, the second apparatus comprises: means for receiving, from the first apparatus, capability information indicating a support in skipping the communication interruption.

In some example embodiments, the capability information further indicates a minimum time difference between a time window where the communication interruption is not allowed and a measurement occasion.

In some example embodiments, the first apparatus is or is comprised in a terminal device, and the second apparatus is or is comprised in a network device.

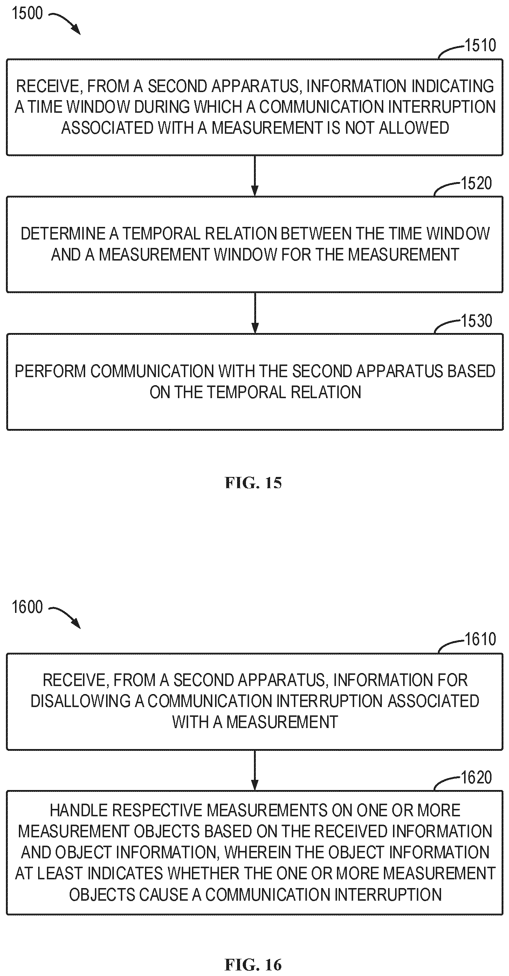

FIG. 15 shows a flowchart of an example method 1500 implemented at a first apparatus in accordance with some example embodiments of the present disclosure. For the purpose of discussion, the method 1500 will be described from the perspective of the first apparatus 110 in FIG. 1.

At block 1510, the first apparatus 110 receives, from a second apparatus, information indicating a time window during which a communication interruption associated with a measurement is not allowed.

At block 1520, the first apparatus 110 determines a temporal relation between the time window and a measurement window for the measurement.

At block 1530, the first apparatus 110 performs communication with the second apparatus based on the temporal relation.

In some example embodiments, the method 1500 further comprises: determining whether the time window is before the measurement window, wherein the communication interruption occurs before the measurement window; in accordance with a determination that the time window is before the measurement window, determining a first time difference between an ending time of the time window and a starting time of the measurement window; and in accordance with a determination that the time difference exceeds a first threshold, shifting the communication interruption to a time location between the ending time of the time window and the starting time of the measurement window.

In some example embodiments, the method 1500 further comprises: in accordance with a determination that the time difference is below the first threshold, skipping the measurement window to avoid the communication interruption.

In some example embodiments, the method 1500 further comprises: determining whether the time window is overlapped with the measurement window; and in accordance with a determination that the time window is overlapped with the measurement window, skipping the measurement window to avoid the communication interruption.

In some example embodiments, the method 1500 further comprises: determining whether the time window is after the measurement window, wherein the communication interruption occurs after the measurement window; and in accordance with a determination that the time window is after the measurement window, shifting the communication interruption to a time location outside the time window.

In some example embodiments, the method 1500 further comprises: in accordance with a determination that the time window is after the measurement window, determining a second time difference between a starting time of the time window and an ending time of the measurement window; in accordance with a determination that the second time difference is below a second threshold, shifting the communication interruption to the time location after the time window.

In some example embodiments, the method 1500 further comprises: in accordance with a determination that the second time difference exceeds the second threshold, shifting the communication interruption to a time location between the starting time of the time window and the ending time of the measurement window.

In some example embodiments, the method 1500 further comprises: receiving, from the second apparatus, configuration information for the time window and a window activation command for the time window, wherein the configuration information and the window activation command define and trigger the time window in combination.

In some example embodiments, the configuration information indicates a duration of the time window and a starting time of the time window, and the window activation command comprises an activation indication of the time window. Alternatively, the configuration information indicates a duration of the time window, and the window activation command indicates a starting time of the time window to activate the time window. In some further example embodiments, the configuration information comprises an enabling indication of the time window, and the window activation command indicates a duration of the time window and a starting time of the time window to activate the time window.

In some example embodiments, the first apparatus is or is comprised in a terminal device, and the second apparatus is or is comprised in a network device.

In some example embodiments, a first apparatus capable of performing any of the method 1500 (for example, the first apparatus 110 in FIG. 1) may comprise means for performing the respective operations of the method 1500. The means may be implemented in any suitable form. For example, the means may be implemented in a circuitry or software module. The first apparatus may be implemented as or included in the first apparatus 110 in FIG. 1.

In some example embodiments, the first apparatus comprises: means for receiving, from a second apparatus, information indicating a time window during which a communication interruption associated with a measurement is not allowed; means for determining a temporal relation between the time window and a measurement window for the measurement; and means for performing communication with the second apparatus based on the temporal relation.

In some example embodiments, the first apparatus comprises: means for determining whether the time window is before the measurement window, wherein the communication interruption occurs before the measurement window; means for in accordance with a determination that the time window is before the measurement window, determining a first time difference between an ending time of the time window and a starting time of the measurement window; and means for in accordance with a determination that the time difference exceeds a first threshold, shifting the communication interruption to a time location between the ending time of the time window and the starting time of the measurement window.

In some example embodiments, the first apparatus comprises: means for in accordance with a determination that the time difference is below the first threshold, skipping the measurement window to avoid the communication interruption.

In some example embodiments, the first apparatus comprises: means for determining whether the time window is overlapped with the measurement window; and means for in accordance with a determination that the time window is overlapped with the measurement window, skipping the measurement window to avoid the communication interruption.

In some example embodiments, the first apparatus comprises: means for determining whether the time window is after the measurement window, wherein the communication interruption occurs after the measurement window; and means for in accordance with a determination that the time window is after the measurement window, shifting the communication interruption to a time location outside the time window.

In some example embodiments, the first apparatus comprises: means for in accordance with a determination that the time window is after the measurement window, determining a second time difference between a starting time of the time window and an ending time of the measurement window; means for in accordance with a determination that the second time difference is below a second threshold, shifting the communication interruption to the time location after the time window.

In some example embodiments, the first apparatus comprises: means for in accordance with a determination that the second time difference exceeds the second threshold, shifting the communication interruption to a time location between the starting time of the time window and the ending time of the measurement window.

In some example embodiments, the first apparatus comprises: means for receiving, from the second apparatus, configuration information for the time window and a window activation command for the time window, wherein the configuration information and the window activation command define and trigger the time window in combination.

In some example embodiments, the configuration information indicates a duration of the time window and a starting time of the time window, and the window activation command comprises an activation indication of the time window. Alternatively, the configuration information indicates a duration of the time window, and the window activation command indicates a starting time of the time window to activate the time window. In some further example embodiments, the configuration information comprises an enabling indication of the time window, and the window activation command indicates a duration of the time window and a starting time of the time window to activate the time window.

In some example embodiments, the first apparatus is or is comprised in a terminal device, and the second apparatus is or is comprised in a network device.

FIG. 16 shows a flowchart of an example method 1600 implemented at a first apparatus in accordance with some example embodiments of the present disclosure. For the purpose of discussion, the method 1600 will be described from the perspective of the first apparatus 110 in FIG. 1.

At block 1610, the first apparatus 110 receives, from a second apparatus, information for disallowing a communication interruption associated with a measurement.

At block 1620, the first apparatus 110 handles respective measurements on one or more measurement objects based on the received information and object information, wherein the object information at least indicates whether the one or more measurement objects cause a communication interruption.

In some example embodiments, the object information comprises an indication of one or more target frequencies to be measured, and switching between a target frequency of the one or more target frequencies and a serving cell frequency causes a communication interruption.

In some example embodiments, the object information comprises pattern information indicating a pattern of a communication interruption caused by a measurement object of the one or more measurement objects.

In some example embodiments, the method 1600 further comprises: determining, from the one or more measurement objects based on the object information, a first measurement object that does not cause a communication interruption; and performing a first measurement on the first measurement object at least partially within a first time window during which a communication interruption is not allowed.

In some example embodiments, the first time window comprises a measurement window immediately after receiving the information.

In some example embodiments, the method 1600 further comprises: determining a second time window during which a communication interruption is allowed; determining, from the one or more measurement objects based on the object information, a first measurement object that does not cause a communication interruption and a second measurement object that causes a communication interruption; and during the second time window, at least partially performing a first measurement on the first measurement object and a second measurement on the second measurement object based on respective priorities of the first and second measurements, wherein a priority of the first measurement is lower than a priority of the second measurement.

In some example embodiments, the method 1600 further comprises: determining, from the one or more measurement objects based on the object information, a second measurement object that causes a communication interruption; and in accordance with a determination that a communication interruption associated with a second measurement on the second measurement object is not allowed, handling the second measurement based on the received information.

In some example embodiments, the received information indicates a time window during which a communication interruption associated with a measurement is not allowed, and the method 1600 further comprises: determining a temporal relation between the time window and a measurement window for the second measurement; and handling the second measurement based on the temporal relation.

In some example embodiments, the method 1600 further comprises: determining whether the time window is overlapped with the measurement window; and in accordance with a determination that the time window is overlapped with the measurement window, skipping the measurement window.

In some example embodiments, the method 1600 further comprises: determining whether the time window is overlapped with the measurement window; in accordance with a determination that the time window is not overlapped with the measurement window, shifting the communication interruption associated with the second measurement to a time location outside the time window; and performing the second measurement within the measurement window based on the shifting.

In some example embodiments, the first apparatus is or is comprised in a terminal device, and the second apparatus is or is comprised in a network device.

In some example embodiments, a first apparatus capable of performing any of the method 1600 (for example, the first apparatus 110 in FIG. 1) may comprise means for performing the respective operations of the method 1600. The means may be implemented in any suitable form. For example, the means may be implemented in a circuitry or software module. The first apparatus may be implemented as or included in the first apparatus 110 in FIG. 1.

In some example embodiments, the first apparatus comprises: means for receiving, from a second apparatus, information for disallowing a communication interruption associated with a measurement; and means for handling respective measurements on one or more measurement objects based on the received information and object information, wherein the object information at least indicates whether the one or more measurement objects cause a communication interruption.

In some example embodiments, the object information comprises an indication of one or more target frequencies to be measured, and switching between a target frequency of the one or more target frequencies and a serving cell frequency causes a communication interruption.

In some example embodiments, the object information comprises pattern information indicating a pattern of a communication interruption caused by a measurement object of the one or more measurement objects.

In some example embodiments, the first apparatus comprises: means for determining, from the one or more measurement objects based on the object information, a first measurement object that does not cause a communication interruption; and means for performing a first measurement on the first measurement object at least partially within a first time window during which a communication interruption is not allowed.

In some example embodiments, the first time window comprises a measurement window immediately after receiving the information.

In some example embodiments, the first apparatus comprises: means for determining a second time window during which a communication interruption is allowed; means for determining, from the one or more measurement objects based on the object information, a first measurement object that does not cause a communication interruption and a second measurement object that causes a communication interruption; and means for during the second time window, at least partially performing a first measurement on the first measurement object and a second measurement on the second measurement object based on respective priorities of the first and second measurements, wherein a priority of the first measurement is lower than a priority of the second measurement.

In some example embodiments, the first apparatus comprises: means for determining, from the one or more measurement objects based on the object information, a second measurement object that causes a communication interruption; and means for in accordance with a determination that a communication interruption associated with a second measurement on the second measurement object is not allowed, handling the second measurement based on the received information.

In some example embodiments, the received information indicates a time window during which a communication interruption associated with a measurement is not allowed, and the first apparatus comprises: means for determining a temporal relation between the time window and a measurement window for the second measurement; and means for handling the second measurement based on the temporal relation.

In some example embodiments, the first apparatus comprises: means for determining whether the time window is overlapped with the measurement window; and means for in accordance with a determination that the time window is overlapped with the measurement window, skipping the measurement window.

In some example embodiments, the first apparatus comprises: means for determining whether the time window is overlapped with the measurement window; mean for in accordance with a determination that the time window is not overlapped with the measurement window, shifting the communication interruption associated with the second measurement to a time location outside the time window; and means for performing the second measurement within the measurement window based on the shifting.

In some example embodiments, the first apparatus is or is comprised in a terminal device, and the second apparatus is or is comprised in a network device.

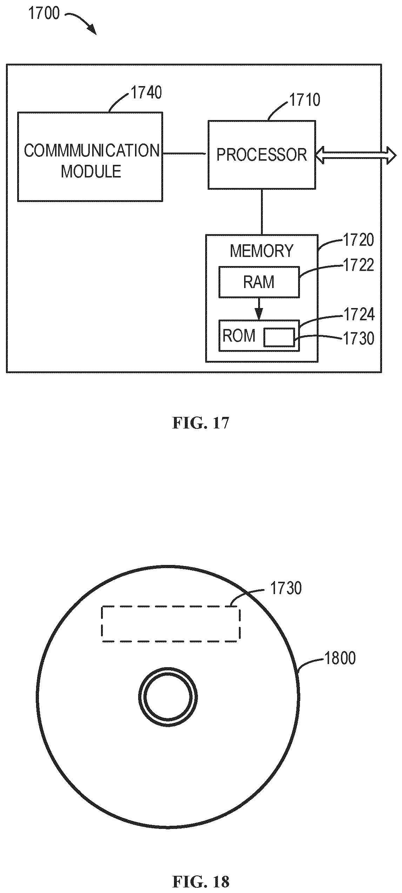

FIG. 17 is a simplified block diagram of a device 1700 that is suitable for implementing example embodiments of the present disclosure. The device 1700 may be provided to implement a communication device, for example, the first apparatus 110 or the second apparatus 120 as shown in FIG. 1. As shown, the device 1700 includes one or more processors 1710, one or more memories 1720 coupled to the processor 1710, and one or more communication modules 1740 coupled to the processor 1710.

The communication module 1740 is for bidirectional communications. The communication module 1740 has one or more communication interfaces to facilitate communication with one or more other modules or devices. The communication interfaces may represent any interface that is necessary for communication with other network elements. In some example embodiments, the communication module 1740 may include at least one antenna.

The processor 1710 may be of any type suitable to the local technical network and may include one or more of the following: general purpose computers, special purpose computers, microprocessors, digital signal processors (DSPs) and processors based on multicore processor architecture, as non-limiting examples. The device 1700 may have multiple processors, such as an application specific integrated circuit chip that is slaved in time to a clock which synchronizes the main processor.

The memory 1720 may include one or more non-volatile memories and one or more volatile memories. Examples of the non-volatile memories include, but are not limited to, a Read Only Memory (ROM) 1724, an electrically programmable read only memory (EPROM), a flash memory, a hard disk, a compact disc (CD), a digital video disk (DVD), an optical disk, a laser disk, and other magnetic storage and/or optical storage. Examples of the volatile memories include, but are not limited to, a random-access memory (RAM) 1722 and other volatile memories that will not last in the power-down duration.

A computer program 1730 includes computer executable instructions that are executed by the associated processor 1710. The instructions of the program 1730 may include instructions for performing operations/acts of some example embodiments of the present disclosure. The program 1730 may be stored in the memory, e.g., the ROM 1724. The processor 1710 may perform any suitable actions and processing by loading the program 1730 into the RAM 1722.

The example embodiments of the present disclosure may be implemented by means of the program 1730 so that the device 1700 may perform any process of the disclosure as discussed with reference to FIG. 4 to FIG. 16. The example embodiments of the present disclosure may also be implemented by hardware or by a combination of software and hardware.

In some example embodiments, the program 1730 may be tangibly contained in a computer readable medium which may be included in the device 1700 (such as in the memory 1720) or other storage devices that are accessible by the device 1700. The device 1700 may load the program 1730 from the computer readable medium to the RAM 1722 for execution. In some example embodiments, the computer readable medium may include any types of non-transitory storage medium, such as ROM, EPROM, a flash memory, a hard disk, CD, DVD, and the like. The term "non-transitory," as used herein, is a limitation of the medium itself (i.e., tangible, not a signal) as opposed to a limitation on data storage persistency (e.g., RAM vs. ROM).

FIG. 18 shows an example of the computer readable medium 1800 which may be in form of CD, DVD or other optical storage disk. The computer readable medium 1800 has the program 1730 stored thereon.

Generally, various embodiments of the present disclosure may be implemented in hardware or special purpose circuits, software, logic or any combination thereof. Some aspects may be implemented in hardware, and other aspects may be implemented in firmware or software which may be executed by a controller, microprocessor or other computing device. Although various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

Some example embodiments of the present disclosure also provide at least one computer program product tangibly stored on a computer readable medium, such as a non-transitory computer readable medium. The computer program product includes computer-executable instructions, such as those included in program modules, being executed in a device on a target physical or virtual processor, to carry out any of the methods as described above. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. The program code may be provided to a processor or controller of a general-purpose computer, special purpose computer, or other programmable data processing apparatus, such that the program code, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program code or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random-access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, although operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, although several specific implementation details are contained in the above discussions, these should not be construed as limitations on the scope of the present disclosure, but rather as descriptions of features that may be specific to particular embodiments. Unless explicitly stated, certain features that are described in the context of separate embodiments may also be implemented in combination in a single embodiment. Conversely, unless explicitly stated, various features that are described in the context of a single embodiment may also be implemented in a plurality of embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A first apparatus comprising:
at least one processor; and
at least one memory storing instructions that, when executed by the at least one processor, cause the first apparatus at least to:
receive, from a second apparatus, information for disallowing a communication interruption associated with a measurement; and
handle respective measurements on one or more measurement objects based on the received information and object information, wherein the object information at least indicates whether the one or more measurement objects cause a communication interruption.

2. The first apparatus of claim 1, wherein the object information comprises an indication of one or more target frequencies to be measured, and switching between a target frequency of the one or more target frequencies and a serving cell frequency causes a communication interruption.

3. The first apparatus of claim 1, wherein the object information comprises pattern information indicating a pattern of a communication interruption caused by a measurement object of the one or more measurement objects.

4. The first apparatus of claim 1, wherein the instructions, when executed by the at least one processor, cause the first apparatus to:
determine, from the one or more measurement objects based on the object information, a first measurement object that does not cause a communication interruption; and
perform a first measurement on the first measurement object at least partially within a first time window during which a communication interruption is not allowed.

5. The first apparatus of claim 4, wherein the first time window comprises a measurement window immediately after receiving the information.

6. The first apparatus of claim 1, wherein the instructions, when executed by the at least one processor, cause the first apparatus to:
determine a second time window during which a communication interruption is allowed;
determine, from the one or more measurement objects based on the object information, a first measurement object that does not cause a communication interruption and a second measurement object that causes a communication interruption; and
during the second time window, at least partially perform a first measurement on the first measurement object and a second measurement on the second measurement object based on respective priorities of the first and second measurements, wherein a priority of the first measurement is lower than a priority of the second measurement.

7. The first apparatus of claim 1, wherein the instructions, when executed by the at least one processor, cause the first apparatus to:
determine, from the one or more measurement objects based on the object information, a second measurement object that causes a communication interruption; and
in accordance with a determination that a communication interruption associated with a second measurement on the second measurement object is not allowed, handle the second measurement based on the received information.

8. The first apparatus of claim 7, wherein the received information indicates a time window during which a communication interruption associated with a measurement is not allowed, and the instructions, when executed by the at least one processor, cause the first apparatus to:
determine a temporal relation between the time window and a measurement window for the second measurement; and
handle the second measurement based on the temporal relation.

9. The first apparatus of claim 8, wherein the instructions, when executed by the at least one processor, cause the first apparatus to:
determine whether the time window is overlapped with the measurement window; and
in accordance with a determination that the time window is overlapped with the measurement window, skip the measurement window.

10. The first apparatus of claim 8, wherein the instructions, when executed by the at least one processor, cause the first apparatus to:
determine whether the time window is overlapped with the measurement window;
in accordance with a determination that the time window is not overlapped with the measurement window, shift the communication interruption associated with the second measurement to a time location outside the time window; and
perform the second measurement within the measurement window based on the shifting.

11. The first apparatus of any of claims 1 to 10, wherein the first apparatus is or is comprised in a terminal device, and the second apparatus is or is comprised in a network device.

12. A method comprising:
receiving, from a second apparatus, information for disallowing a communication interruption associated with a measurement; and
handling respective measurements on one or more measurement objects based on the received information and object information, wherein the object information at least indicates whether the one or more measurement objects cause a communication interruption.

13. A computer readable medium comprising instructions stored thereon for causing an apparatus at least to perform the method of claim 12.
